(19) Europäisches Patentamt

European Patent Office

Office européen des brevets

(11) **EP 1 270 076 A1**

(12) **EUROPEAN PATENT APPLICATION**

(43) Date of publication:
02.01.2003 Bulletin 2003/01

(51) Int Cl.$^7$: **B03B 1/04**, C02F 1/56, C02F 1/54

(21) Application number: 02022028.1

(22) Date of filing: 17.04.1995

(84) Designated Contracting States:
**AT BE CH DE DK ES FR GB GR IE IT LI LU MC NL PT SE**
Designated Extension States:
**LT SI**

(30) Priority: **18.04.1994 US 229012**

(62) Document number(s) of the earlier application(s) in accordance with Art. 76 EPC:
**95917017.6 / 0 756 581**

(71) Applicant: **VIRGINIA TECH INTELLECTUAL PROPERTIES, INC.**
**Blacksburg, VA 20460 (US)**

(72) Inventor: **The designation of the inventor has not yet been filed**

(74) Representative: **Läufer, Martina, Dr. et al**
**Gramm, Lins & Partner GbR**
**Freundallee 13**
**30173 Hannover (DE)**

Remarks:
This application was filed on 01 - 10 - 2002 as a divisional application to the application mentioned under INID code 62.

(54) **Dewatering of wet particulate material**

(57) Small, wet particulate material is effectively dried by adding a hydrophobizing agent to the wet particulate material to coat the surfaces of particulates, and then using a gaseous fluid to mechanically remove water droplets from the surfaces of the particulates. Once on the surface of the particulates, the hydrophobizing reagent makes the particulates relatively more hydrophobic and increases the contact angle between the particulates and water preferably to an angle of 90 degrees or greater. The activity of the hydrophobizing reagent is to repel water. After altering the hydrophobicity of the particulates, the gaseous fluid, which is preferably air under pressure, is directed at mild pressure over the surfaces of the particulates to remove the water. Because the tendency of the hydrophobizing agent is to increase the particulates' tendency to repel water, the water is easily displaced from the surface of the particulates under mild conditions. The process can be used to dewater a wide variety of constituents including coal particles, clays, sulfide minerals, phosphorous compounds, metal oxide minerals, metals and waste sludge.

FIG.3

**Description**

BACKGROUND OF THE INVENTION

Field of the Invention

The invention is generally related to removing water from small particles by economical, safe, and effective methodologies. More particularly, the invention contemplates one methodology wherein liquified gas displaces attached water droplets in a spontaneous reaction with the coal being subsequently rendered dry by vaporizing the liquified gas, and another methodology wherein the surface chemistry of the particle is altered to be more hydrophobic and have an increased contact angle for the water with respect to the particle, such that the water can be quickly displaced by a mechanical technique such as passing air over the particles.

Description of the Prior Art

Minerals such as coal, clays, phosphates, sulfides and the like, and metals such as copper, tungsten, silver, and gold, are often mixed with water to form an aqueous slurry for various processing operations. For example, U.S. Patent U.S. Patents 4,981,582, 5,167,798, and 5,397,001 to Yoon et al. describe microbubble floatation technology used to separate fine particles of minerals or coal from non-valuable materials. Also, waste materials are often disposed of with water in various sewage handling operations.

While water provides a convenient medium for performing a wide variety of operations, such as cleaning, material transport, reaction chemistry, etc., problems arise when the ultimate product desired is dried particulate material. When water clings to the surfaces of valuable materials such as coal, clays, minerals, metals, etc., it adds non-useful weight to the material. This weight increases the cost of transporting the material by truck or train. In addition, the water may affect the performance of the material. For example, coal burns less efficiently.

The problem of surface water clinging to particulates is most severe in smaller particles, such as particles of less than 0.2 inches or 0.5 mm in diameter. This is due to the smaller particles having much higher surface-to-volume ratios.

A wide variety of technologies have been developed to dry particulate matter.

one method simply involves removing water by heating the material. Thermal heating requires a significant amount of energy input. The energy must be sufficient to overcome the attraction between the water molecules with each other and the particulate material, thereby vaporizing the water and leaving a dry material. As a practical matter, the cost of the energy required to thermally dry the particulate material may be more expensive than the value of the particulate material to be salvaged. In addition, the thermal drying technique would be inneffective for particulate materials which liquify or undergo a phase change below the temperature required for water removal, and the thermal drying technique poses environmental problems due to the requirement of large amounts of air input and steam effluent.

Another method involves mechanically removing water by vacuum filtration, pressure filtration, hyperbaric filtration, centrifugation, etc. While these techniques do not expose the particulate matter to heat, they still require a large amount of energy input. Under these methods, energy is required to overcome the force of attraction of the water molecule to the particulate matter. Current mechanical dewatering techniques have not proven satisfactory in achieving a suitable dryness in coal and minerals processing operations. in addition, these techniques are time consuming, and often involve tedious steps such as the separation of caked particulates.

Currently, small particles of phosphates, coal, and other minerals and metals, are often discarded due to difficulties in cleaning and drying the particles. This practice is tremendously wasteful and has an adverse impact on the environment. What is needed is an environmentally safe, effective, and inexpensive method for dewatering particles, that will allow the recovery and use of material which would otherwise be discarded.

SUMMARY OF THE INVENTION

It is an object of this invention to provide a low cost, safe and effective technique for dewatering particles.

It is anther object of this invention to utilize a liquified gas which spontaneously displaces surface water in a particle drying process.

It is another object of this invention to provide a dewatering process which employs water soluble or dispersible, disposable, hydrophobizing agents as dewatering aids.

According to the invention, water is removed from particulate surfaces at low cost and with high effectiveness using two different processes which operate on the principle of displacing water from the surface of the particle.

In one embodiment, a slurry of hydrophobic particles and water is pumped into a mixing chamber along with a gas that can be converted into a nonpolar, hydrophobic liquid. The pressure within the chamber is maintained sufficiently high enough to condense the gas into its liquid form. The hydrophobic liquid formed as a result of the condensation displaces the water from the surface of the particles because it has a higher affinity for the hydrophobic particle surface than does the water for the particle surface. When a sufficient amount of the hydrophobic liquid is used, each particle is completely encapsulated by a film of the hydrophobic liquid without leaving water in between. The mixture of particles, water, and non-polar liquid is then passed into another chamber in which the particles and hydrophobic liquid are phase-separated from the displaced water. The hydrophobic liquid can be recovered from the particles by lowering the pressure to atmospheric conditions to convert it to a gaseous form. The gas then can be recycled, and compressed to form the hydrophobic liquid.

In another embodiment, the surfaces of particles are altered to make them more hydrophobic. The water contact angle on the particle surface as measured through the water phase increases as the hydrophobicity of the particle increases, and this change in the contact angle reduces the tendency of water droplets to remain attached to the surfaces of the particles. The surface chemistry of the particles can be changed while the particles are in a mixture or slurry together with water simply by adding a hydrophobizing agent, such as a hydrophobic polymer, surfactant, or combinations thereof, to the mixture or slurry. The hydrophobizing agent will have a stronger attraction for the particle surface than water and will be able to coat the particle surfaces. After the particles have been rendered more hydrophobic, they can be mechanically dewatered by application of direct air pressure, vacuum filtration, centrifugation or the like.

BRIEF DESCRIPTION OF THE DRAWINGS

The foregoing and other objects, aspects and advantages will be better understood from the following detailed description of the preferred embodiments of the invention with reference to the drawings, in which:

Figure 1 is a schematic diagram showing the changes in surface free energies with the transfer of a particle from water to air phase;

Figure 2 is a schematic diagram showing the equilibrium between interfacial energies at a three phase contact, where $\gamma_{12}$, $\gamma_{13}$, and $\gamma_{23}$, are the interfacial tensions between the particle and air, the particle and water, and water and air, respectively;

Figure 3 is a schematic diagram similar to that shown in Figure 2, but where a hydrophobizing agent has been added to the surface of the particle;

Figure 4 is a schematic diagram showing equipment used to dewater particles, such as fine coals, according to one embodiment of this invention;

Figure 5 is a schematic diagram showing equipment, according to the first embodiment of this invention, used to dewater particles;

Figure 6 is a diagram showing the interface of the hyrdophobic particle, hydrophobic liquid, and water at the surface of the particle; and

Figures 7a and 7b are drawings of the surface of a hydrophobic particle illustrating evaporation and displacement, respectively.

DETAILED DESCRIPTION OF THE PREFERRED

EMBODIMENTS OF THE INVENTION

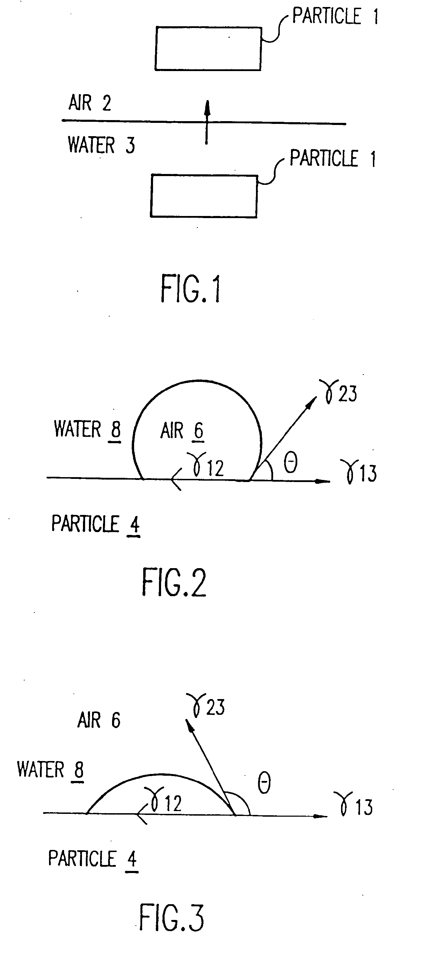

Figures 1-3 illustrate one of the central principles of this invention. Specifically, with reference to Figure 1, a particle 1 is shown to emerge from water phase 3 to air or vapor phase 2. The free energy per unit surface area of the particle is given by Equation 1.

$$\frac{\delta Gdis}{\delta A} = \gamma_{12} - \gamma_{13} \qquad (1)$$

In Equation 1, $\gamma_{12}$ is the interfacial tension between the particle and air and $\gamma_{13}$ is the same between the particle and water.

Figures 2 and 3 show alternative equilibrium diagrams for the three interfacial tensions at the three-phase contact of the particle 4, air 6, and water 8. The Young's equation, derived from both Figures 2 and 3, can be used to express $\gamma_{12}$ as a function of water contact angle, $\theta$, and the interfacial tension between water and air, $\gamma_{23}$. Equation 2 sets forth the Young's equation.

$$\gamma_{12} = \gamma_{23} \cos \theta + \gamma_{13} \tag{2}$$

By substituting Equation 2 into Equation 1, the relationship set forth in Equation 3 is obtained.

$$\frac{\delta Gdis}{dA} = \gamma_{23} \cos \theta \tag{3}$$

In order for dewatering from a particle surface to be spontaneous, $dG_{dis}/dA$ should be less than zero. As is set forth in Equation 4, spontaneous dewatering of a particle requires that the contact angle between the water 8 and particle 4, as measured through the water phase, be greater than 90°.

$$Eq.\ 4$$

$$\gamma_{23} \cos \theta < 0$$

This condition is expressly shown in Figure 3.

Unfortunately, most particulate materials are not hydrophobic enough to allow for spontaneous dewatering. Even the most hydrophobic bituminous coals have water contact angles of less than 65°, as measured by the captive bubble or sessile drop technique (See, Aplan, Advances in Coal and Mineral Processing Using Flotation, SME, Littleton, CO, 95(1989)). Figure 2 illustrates the situation where the contact angle is less than 90°.

The above explanation demonstrates that mechanical dewatering of most particulate materials, including materials which have been generally regarded as hydrophobic, without prior modification of the interfacial tensions $\gamma_{12}$, $\gamma_{13}$, and $\gamma_{23}$, is not a thermodynamically favorable process.

This invention contemplates utilizing surface chemistry conditions to achieve a low cost, but effective, dewatering of fine particles. The invention includes one embodiment wherein the particles are hydrophobic by nature and a hydrophobic liquified gas is added to displace water, and the invention includes another embodiment wherein the hydrophobicity of the particle surfaces are intentionally altered to make the thermodynamics of mechanical dewatering more favorable.

Both processes will be useful in dewatering a wide variety of particulate materials including coals, sulfide minerals, industrial minerals, metal oxide minerals, metals, waste materials, or other particles. The process can be used for dewatering small particles which are typically less than 0.5-3 inches in diameter. However, it has particular application in dewatering very fine particles which are on the order of nanometers to millimeters (10mm-1nm) in size. As discussed above, removal of water from very fine particles is a more difficult task because these particles have a much higher surface to volume ratio.

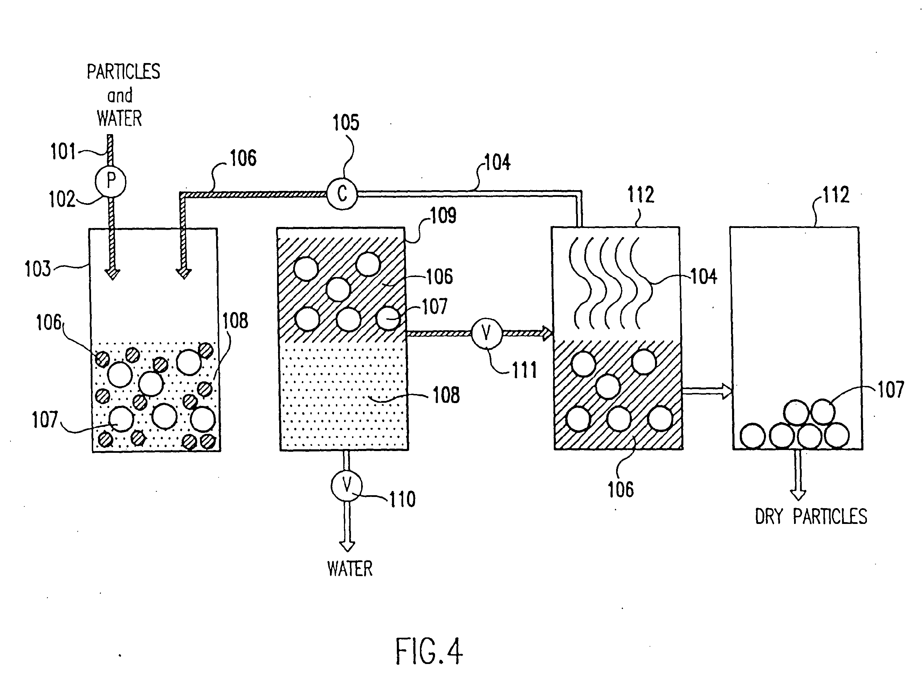

With respect to the first embodiment of this invention and with particular reference to Figure 4, which is designed to explain the process concept schematically, an aqueous particle slurry 101 is directed by a suitable means such as pump 102 into a mixing chamber 103, in which a non-polar liquified gas 106 is also introduced. The aqueous particle slurry 101 can have a moisture content ranging from 10% water to 99.9% water, and the invention is quite useful with slurries of high solids content ranging from 10% to 60% water. The chamber 103 is pressurized to maintain the nonpolar hydrophobic compound 106 in liquid state. Inside the chamber 103, the hydrophobic liquid 106 displaces the water 108 from the surface of particles 107 and spreads over the surface of the particles 107 to form a film. In the first embodiment of this invention, the particles 107 must be hydrophobic in character, such as bituminous or anthracite coals, since the interaction of and attraction between the hydrophobic liquid 106 and the particles 107 must be stronger than the attraction betwen the water 108 and particles 107.

The mixture of the particles 107, water 108 and hydrophobic liquid 106 is then moved to another chamber 109, where the hydrophobic liquid 6 containing particles 107 are phase-separated from water 108 by allowing a quiescent condition. The water 108 is discarded through valve 110 in chamber 109, to leave a mixture of particles 107 and hydrophobic liquid 106.

If desired, the mixture of particles 107 and hydrophobic liquid 106, can be transferred to a third chamber 112 through valve 111 for recovery of the hydrophobic liquid. However, chamber 109 could be modified such that the water 108 is separated and then the hydrophobic liquid 106 is separated in batch fashion. In order to recover the hydrophobic liquid 106, pressure is reduced to atmospheric conditions. The pressure reduction causes the hydrophobic liquid 106 to vaporize and form a gas 104. The gas 104 is subsequently compressed to reform the hydrophobic liquid 106 at compressor 105. In this way, minimal loss of the hydrophobic liquified gas 106 can be achieved, and recycling of the hydrophobic liquified gas 106 reduces the overall cost of the dewatering process. After removal of the gas 104, the dry particles can be retrieved from chamber 112.

The dewatering process thus described can achieve dryness levels of 20% moisture and below from feedstock containing greater than 40-99% moisture. Tests with fine coal dewatering have demonstrated that moisture contents as low as 0.1-5% can be achieved.

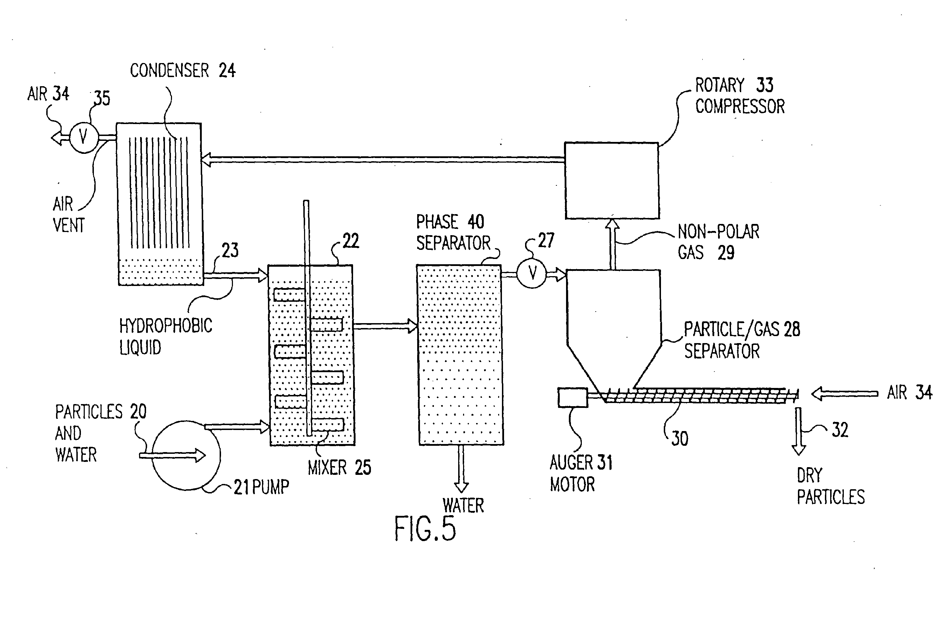

Figure 5 shows a detailed schematic for the process presented in Figure 4. An aqueous slurry of particles and water (e.g., coals, clays, phosphates, etc.) is directed by a pump 21 into a mixing chamber 22 along with a non-polar, hydrophobic liquid sent from condenser 14 into the mixing chamber 22. The mixing chamber 20 is kept at a. pressure sufficient to maintain the hydrophobic liquid in its liquid form. An agitator or stirring paddle 25 creates turbulence inside the mixing chamber 22 so that there is good contact between the particles and the droplets of the hydrophobic liquid. Upon contact between the particle and hydrophobic liquid droplet, the latter displaces water from the particle surface.

The mixture of particles, water and hydrophobic liquid is then transferred to a phase separator 40, where the water is separated from the hydrophobic liquid phase containing fine particles. The amount of the hydrophobic liquid is controlled so that the phase-separation can be achieved without entraining water.

The phase-separated hydrophobic liquid containing particles is removed via a valve 27 to a particle/gas separator 28, where the pressure is reduced or the temperature is raised so that the non-polar liquid is recovered in gaseous form. An auger 30 driven by a motor 31 transports the dry particulate product 32 to storage, end use, or further processing stages, while the non-polar gas 29 is recycled for reuse. The non-polar gas containing some entrained air 34 which enters by way of the auger 30 is compressed using a rotary compressor 33 in order to transform the non-polar gas into liquid. Before venting the entrained air into the atmosphere, the mixture-of the non-polar liquid and air is sent to a condenser 24, so that the vapor pressure of the non-polar liquid is reduced, thereby minimizing the loss of the nonpolar liquid. Air vent 35 allows the air to escape the condenser 24 after condensation has occured.

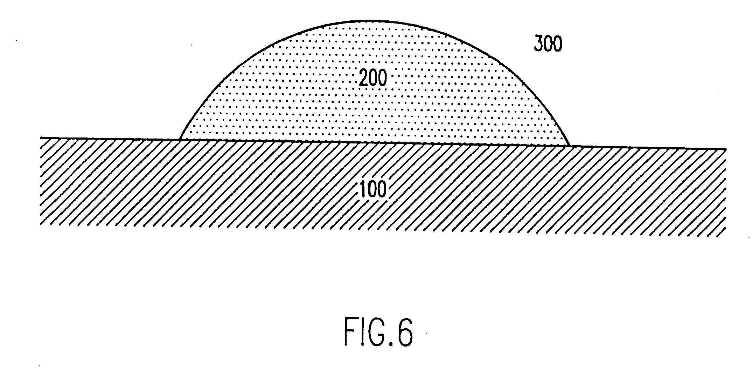

Figure 6 shows a drop of hydrophobic liquid 200 positioned on a hydrophobic particle surface 100 immersed in water 300. When the hydrophobic liquid 200 displaces the water 300 from the surface 100, the contact area between the particle and the hydrophobic liquid 200 will increase at the expense of the contact area between the particle surface 100 and water 300. In order for the displacement to occur spontaneously, the free energy associated with it ($\Delta G_{dis}$) should be negative as follows:

$$\text{Eq. 1} \qquad \Delta G_{dis} = (\gamma_{12} + \gamma_{23}, - \gamma_{13})\, dA$$

in which $\gamma_{12}$ is the interfacial tension between the particle surface 100 and the hydrophobic liquid 200, $\gamma_{23}$ the same between the hydrophobic liquid 200 and water 300, $\gamma_{13}$ the same between the particle surface 100 and water 300, and dA is the change in the contact area between the particle surface and the hydrophobic liquid.

By dividing Eq.1 with dA, one can obtain the following relationship:

$$(dGdis/dA) = \gamma_{12} + \gamma_{23} - \gamma_{13} < 0 \tag{2}$$

in which dGdis/dA is the free energy of displacement per unit area. One can substitute the following relationships:

$$\gamma_{12} = \gamma_1 + \gamma_2 - 2\sqrt{\gamma_1^\delta \gamma_2^\delta} - 2\sqrt{\gamma_1^P \gamma_2^P} \tag{3}$$

$$\gamma_{23} = \gamma_2 + \gamma_3 - 2\sqrt{\gamma_2^\delta \gamma_3^\delta} - 2\sqrt{\gamma_2^P \gamma_3^P} \tag{4}$$

$$\gamma_{13} = \gamma_1 + \gamma_3 - 2\gamma_1^\delta \gamma_3^\delta - 2\sqrt{\gamma_1^\delta \gamma_3^\delta} - 2\sqrt{\gamma_1^P \gamma_3^P} \tag{5}$$

which are generally known as Fowkes equation, and where -yj is the surface tension of the particle, is the surface tension of the hydrophobic liquid, 73 is the surface tension of water, the superscript d refers to the dispersion component of the respective surface tension, and the superscript p refers to its,polar component Eq. (2) then becomes:

$$\frac{\delta Gdis}{dA} = 2\gamma_2 - 2\,(\sqrt{\gamma_1^\delta \gamma_2^\delta} + \sqrt{\gamma_1^P \gamma_2^P} + \sqrt{\gamma_2^\delta \gamma_3^\delta} + \sqrt{\gamma_2^P \gamma_3^P} + \sqrt{\gamma_1^\delta \gamma_3^\delta} + \sqrt{\gamma_1^P \gamma_3^P}) < 0 \tag{6}$$

from which one can obtain the following relationship:

$$2\gamma_2 < (\sqrt{\gamma_1^\delta \gamma_2^\delta} + \sqrt{\gamma_1^P \gamma_2^P} + \sqrt{\gamma_2^\delta \gamma_3^\delta} + \sqrt{\gamma_2^P \gamma_3^P} + \sqrt{\gamma_1^\delta \gamma_3^\delta} + \sqrt{\gamma_1^P \gamma_3^P}) \qquad (7)$$

which represents a thermodynamic criterion for the dewatering process as described in the first embodiment of the invention.

The term $2\gamma_2$ is the work of cohesion of the hydrocarbon liquid, while the first, second and the third terms on the right-hand side of the inequality represent the work of adhesions between particle and oil, oil and water, and particle and water, respectively. Therefore, Eq. 7 can be explained qualitatively as follows:

$$\text{WORK OF COHESION} < \text{WORK OF ADHESION OF 2 ON 1} + \text{WORK OF ADHESION OF 2 ON 3} - \text{WORK OF ADHESION OF 3 on 1} \qquad (8)$$

which states that for the hydrophobic liquid to displace the water from the particle surface, the work of cohesion of the liquid should be smaller than the sum of the work of adhesion of the liquid on the particle and the work of adhesion of the liquid on water minus the work of adhesion water on the particle. Usually, the work of adhesion of a hydrophobic liquid on water is significantly smaller than that between a hydrophobic particle, such as coal, and the hydrophobic liquid. Therefore, the thermodynamic criterion for dewatering by displacement dictates that the interaction energy between the hydrophobic liquid and particle should exceed that between the particle and water, and that the difference between the two be larger than the work of cohesion of the hydrophobic liquid.

Based on the thermodynamic reasoning discussed above, the non-polar liquids that can be used for the dewatering process as described in the present invention should have as high affinity as possible for the particle to be dewatered, while the particle should be as hydrophobic as possible. The dewatering process based on displacement will work extremely well with hydrophobic coals such as the bituminous and anthracite coals mined in eastern U.S. The interaction between the particle and hydrophobic liquid is driven by the hydrophobic forces, which was first measured and reported in scientific literature in 1984 by Israelachivili and Pashley.

Another important criterion for the hydrophobic liquid is that its work of cohesion be as low as possible. At the same time, the nonpolar liquids employed within the practice of this invention should have high enough vapor pressure so that they are in gaseous form at room temperature, but can readily be converted to liquid form through application of pressure.

Suitable non-polar liquids that meet these criteria include the normal paraffinic hydrocarbons (such as ethane, propane, butane and isobutane) and carbon dioxide (although carbon dioxide does not float on water as is shown in. Figures 5 and 6. The most ideal non-polar liquid that can be used for dewatering may be butane which can be liquified ata pressure between 25-35 psi above atmosphere at room temperature. Mixtures of non-polar liquids (e.g., 5-95% butane and 5-95% propane) can also be used and may provide benefits in terms. of cost and safety of operation.

EXAMPLE 1

The process of the present invention will be further illustrated by the following example. A 400 mesh bituminous coal from Pittsburgh No. 8 seam was dispersed in tap water to prepare a 5% by weight of coal slurry. The coal sample had been stored in a freezer to keep it from loosing its surface hydrophobicity due to superficial oxidation. Approximately 75 ml of the slurry was placed in a copper tubing with two valves on each end. With the tubing standing verticily, a stream of butane gas was injected through the valve at the bottom until the pressure was high enough to convert the gaseous butane into its liquid form. After closing the valve at the bottom, the mixture of coal, water and liquid butane was agitated for a few minutes by shaking the tubing vigorously by hand. The copper tubing was then let to stand vertically to allow phase-separation. The water was slowly removed from the tubing by opening the valve at the bottom. The valve was closed when the mixture of coal and butane began to come out of the tubing. At this point, what was left in the tubing was a mixture of mostly coal and butane in liquid form. The butane was removed from the coal by opening the valve at the top so that it can exit the copper tubing as gas. The coal was removed from the copper tubing and analyzed for moisture. The product coal assayed 3.6% moisture.

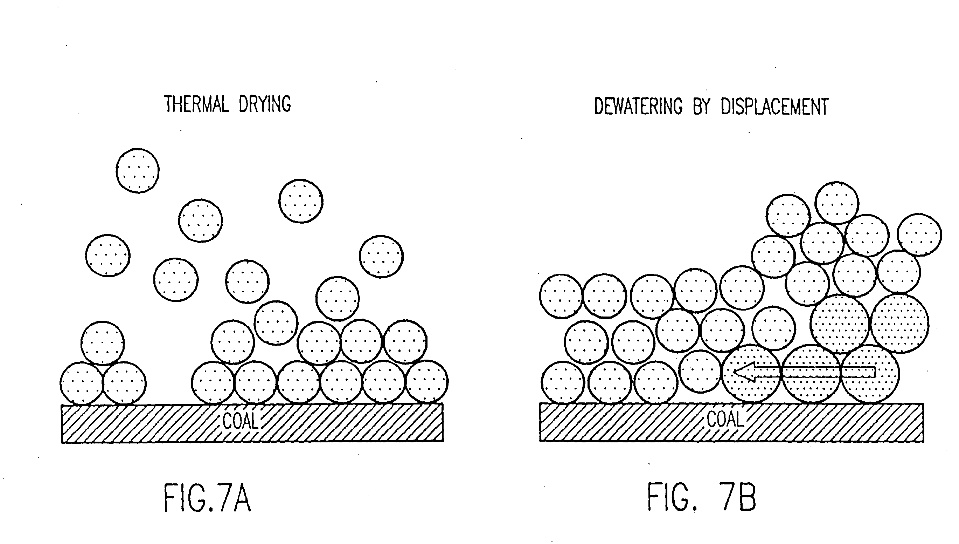

As such, the process is capable of dewatering fine particles such as coal containing a wide range of moisture (10-98% by weight). The moisture content of the product is comparable to those by thermal drying (e.g., less than 20% by weight), but requires significantly less energy. Very dry coal of less than 5% moisture is easily achieved. Figures 7a and 7b illustrate the reason why the dewatering process described should be cheaper than the thermal drying. In the latter, large amounts of heat exceeding the latent heat of evaporation is required to remove all the water molecules which are deposited in multilayers. On the other hand, the dewatering process based on displacement as described in the present embodiment invention requires only the energy necessary to displace the water molecules in the first monolayer. The only significant energy consumption in the present invention would be to recycle the hydrophobic liquid, which is minimal as compared to thermal drying.

The displacement of water by an easily recoverable, non-polar liquid will provide substantial savings in energy costs since water will not need to be evaporated. Since the process can handle particle slurries having a wide range of solids contents, no other dewatering step is required to obtain suitable feed. Dust and explosion hazards are also reduced since no heating is involved. The process is capable of treating even the finest particle sizes with little difficulty (e.g., micron to millimeter dimensions).

In the second embodiment of the invention, the hydrophobicity of particle surfaces is altered such that the thermodynamics of mechanical dewatering become more favorable. This is accomplished by adding water soluble or dispersible, disposable, hydrophobizing reagents to a mixture or slurry of particles and water. The hydrophobizing reagent will be selected to change the surface chemistry of the particle such that the water contact angle on particle is increased and the water is more easily removed from the particle surface. Preferably, the contact angle is increased to 80-90° or more. As discussed above, when the contact angle is greater than 90°, dewatering.can be spontaneous.

The hydrophobizing reagent must be water soluble or water dispersible (e.g., as an emulsion) in order to enable it to be applied to the surfaces of the particles being dewatered. Solid and nonsoluble reagents will not be distibutable onto the surfaces of the particles simply by addition to a mixture of water and particles. What is needed is a disposable reagent that can be added directly to the water/particle mixture or slurry, and which will dissolve and distribute itself over the surfaces of the particles in the mixture or slurry. Agitation of the water/particle mixture or slurry after addition of the hydrophobizing reagent can assist in distributing the hydrophobizing reagent.

The mixture of particles and water into which the hydrophobizing reagent is deposited should have a moisture content of 5%-99%. The invention is practicable with mixtures having high solids content, such as, for example, mixtures with a moisture content of 10-60%. If desired, all or a substantial portion of the free water can be removed from the mixture by filtration, straining or other means prior to adding the hydrophobizing reagent. However, it is expected that having some free water present (5-99%) prior to addition of the hydrophobizing reagent is beneficial since the free water can serve as a vehicle for distributing the hydrophobizing reagent on the particle surfaces.

One example of suitable hydrophobizing reagents within the practice of this invention are low molecular weight hydrophobic polymers or polymer blends. Preferably, the hydrophobic polymer will have a molecular weight ranging from 5,000 to 20,000,000 daltons. Most preferably, th hydrophobic polymer will have a molecular weight ranging from 50,000 to 10,000,000 daltons. Higher molecular weight polymers tend to have much larger viscosity, and to not be water soluble. Suitable hydrophobic polymers include polymethacrylates, polyacrylates, polysiloxanes, hydrophobic polyacrylamides, polypropylene glycols, and hydrophobic emulsion polymers.

The Hydrophile-Lipophile (HLB) is an empirical method first developed by Griffin (see, Griffin, J. Soc. Cosmet. Chem., 1949, Vol. 311) for quantifying the surface activity of a surfactant based on its molecular composition. The HLB value ranges from 0 to 20. At the high end of the scale are hydrophilic surfactants which possess high water solubility and generally act as solubilizing agents, detergents and stabilizers for oil-in-water emulsions; at the low end are surf actants with low solubility which as solubilizers of water in oils and good water-in oil emulsion stabilizers.

Another example of suitable hydrophobizing reagents are surfactants such as fatty esters, ethoxylated fatty acids, ethoxylated fatty esters and oils, short chain alkyl- (e.g., $C_6$ or less) and alkyl-aryl (e.g., $C_{12}$ or less) surfactants, nonionic surfactants of low HLB values (e.g., 10 or less), and mixtures thereof. The surfactants should be chosen to enhance dewatering by increasing the hydrophobicity of the particles; rather than enhancing the wettability of the particles, as is the case with many surfactants. Long chain surfactants have a tendency to absorb on hydrophobic surfaces, such as coal, with Inverse orientation. Under this condition, the polar groups of surfactants point toward the aqueous phase, making the surface more hydrophillic. This situation can be avoided if shorter chanin surfactants are used. For example, optimum results can be achieved when the chain length is 2-8. When the chain length is properly controlled, the attractive hydrophobic force between the hydrocarbon tail and the particle surface can be made smaller than the attractive force between the polar group of surfactants and the polar (or hydrophillic) sites on the particle surface. In this case, the surfactant can adsorb selectively on the hydrophillic sites of coal with the normal mode of orientation, i.e., with polar heads in contact with the surface and the hydrocarbon tail pointed toward the aqueous phase, thereby increasing the overall hydrophobicity of the particle.

The concentration of the hydrophobizing reagent added to the water/particle mixture or slurry need not be very high. Optimum results have been obtained when 1-40 lbs of hydrophobizing reagent per ton of particles have utilized. For example, surfactants added to slurry of coal having a moisture content of 98% at a ratio of 2-8 lbs/ton of coal particles were useful in allowing dewatering to a moisture content of 5%. One should not add a significant amount of the hydrophobizing reagent to the water/particle mixture or slurry, since, the objective is to dewater the particles, not to add the weight of the surfactant to the particles.

Once the hydrophobizing agent has been combined with the water/particle mixture, and allowed a sufficient time for the hydrophobizing reagent to become distributed throughout the mixture onto the surfaces of the particles, the water can be removed by mechanical means. Suitable mechanical techniques include centrifugation, vacuum filtration, pressure filtration and the like. The prior chemical treatment with the hydrophobizing reagent allows the water to be removed more quickly and inexpensively with the mechanical techniques. In addition, results have demonstrated that the water removal is considerably more effective after prior alteration of the particle hydrophobicity. For example, particle dryness down to a moisture content of 20% was easily achieved, and moisture contents as low as 1 - 2% were obtained. To be commercially applicable, it is desirable to obtain dryness levels below 20%, and most preferable below 5-10%.

A simple procedure to remove the water from the mixture is to place the particles on a filter media or sieve, allow the free water to be strained from the mixture, and to direct a gas such as air over the surfaces of the particles. Due to the contact angle being altered prior to the air pressure treatment, water will be removed from the surfaces extremely easily or even spontaneously when air is used as the mechanical mechanism for removing water, good results have been obtained when the air is applied at pressures ranging from 10 psi to 140 psi. The air or gas temperature can be at ambient (e.g., 20-35°C). Alternatively, the air or gas can be heated slightly prior to directing it across the surfaces of the particles (e.g., up to 75°C).

An important feature of this invention is that heating the particles is generally avoided and is not required. Thus, the process allows obtaining very dry particles without the expense associated with thermal drying procedures.

EXAMPLE 2

A run-of-mine Lower Kittaning coal (~100 mesh) was dispersed in water to obtain 13.8% solid slurry. A hydrophobic polymer (polymethylhydrosiloxane) was added to the slurry in the amount of 13 lbs/ton of coal on a dry basis. The slurry was agitated for one minute to ensure complete dissolution of the water soluble hydrophobic polymer. The slurry was then subjected to vacuum filtration using a laboratory Buchner glass filtering funnel with coarse Porosity. The filtration was conducted for different periods of time. The dewatered coal samples were removed from the filtering funnel and analyzed for moisture content. After five minutes of filtration, the moisture content was reduced to 8.9%. In control tests in which no dewatering aids were used, the moisture content was as high as 29%,

EXAMPLE 3

A run-of-mine coal (~100 mesh) from the Lower Kittaning seam was mixed with water to prepare a coal slurry containing 20% solids. A water-soluble hydrophobic polymer (polymethylhydrosiloxane) was added to the slurry in the amount of 13 lbs/ton of coal on a dry basis. The slurry was agitated for one minute to ensure complete dissolution of the reagent and subsequent adsorption on the coal surface, so that the coal particles in the slurry become hydrophobic. The slurry was then subjected to vacuum filtration. In control tests in which no dewatering aids were used, the moisture content was 26%. When the dewatering aid was used, the moisture was reduced to 11%. These results demonstrated that the hydrophobic dewatering aids can be used at high % solids.

EXAMPLE 4

A Pittsburgh No. 8 coal sample (~100 mesh) was subjected to dewatering tests. The coal sample was a clean coal product obtained using a flotation column followed by an enhanced gravity separator. The coal sample was dispersed in water at 2% solids. A mixture of surfactants, which consists of fatty esters and butanol (a short-chain surfactant), was used as a dewatering aid. The amounts of the dewatering agents used were in the range of 3-40 lbs/ton. The slurry was agitated for one minute after the addition of the dewatering aids to ensure adequate dispersion and dissolution, The coal slurry was then subjected to vacuum filtration at 25 psi for two minutes. The filtration experiment was conducted using a ceramic Buchner filtering funnel with medium porosity filter paper. Table 1 presents the results obtained using different amounts of the dewatering aids. The moisture content was as low as 1.4% at 38 lbs/ton. At low reagent dosages, the moisture contents were higher, however, the results were far superior to the case of not using any dewatering aids under the same experimental conditions.

TABLE 1

| Dewatering Aid Dosage (lbs/ton) | % Moisture |
|---|---|
| 0 | 34.8 |

TABLE 1 (continued)

| Dewatering Aid Dosage (lbs/ton) | % Moisture |
|---|---|
| 3 | 10.1 |
| 8 | 5.7 |
| 38 | 1.4 |

EXAMPLE 5

Lead. and zinc sulfide concentrates obtained from laboratory flotation tests were subjected to a series of dewatering tests. The concentrates were obtained from a Red Dog ore, Alaska. Each concentrate was dispersed in water at 10% solids. A mixture of short-chain (butanol) and long-chain (fatty esters) surfactants were added to each of the mineral slurry and agitated for one minute to allow the reagents to adsorb on the mineral surfaces. The slurry was then subjected to vacuum filtration at 25 psi for one minute.

When no dewatering aids were used, the moisture contents were reduced to 17% for the zinc concentrate and to 17.6% for the lead concentrate. When 9 lbs/ton of the dewatering aid was used, the moisture contents were reduced to 11.2% for the zinc concentrate and to 11% for the lead concentrate. The results show that the dewatering aids can significantly reduce the moisture content. When the reagent dosage was increased, the moisture contents were further reduced to 9%.

While the invention has been described in terms of its preferred embodiments, those skilled in the art will recognize that the invention can be practiced with modification within the spirit and scope of the appended claims.

**Claims**

1. A method for dewatering moist particulates, comprising the steps of:

   altering the hydrophobicity of surface of moist particulates by adding a sufficient quantity of a water soluble or water dispersible hydrophobizing reagent to a mixture containing water and said moist particulates to coat said surfaces of said moist particulates said hydrophobizing reagent being selected from the group consisting of fatty esters, ethoxylated fatty acids, ethoxylated fatty esters and oils; and mechanically removing water from said surfaces of said moist particulates to produce dry particulates.

2. The method of claim 1 wherein said altering step is performed on moist particulates selected from the group consisting of coals, clays, sufide minerals, phosphates, metal oxide minerals, metals, industrial minerals, and waste materials.

3. The method of claim 1 or 2 wherein said altering step is performed on moist particates having a diameter of less than 76 mm (3 inches).

4. The method of claim 3 wherein said moist particulates have a diameter of less than 5 mm (0.2 inches).

5. The method of one of claims 1 to 4 wherein said altering step is performed on moist particulates having a moisture content ranging from 5 % to 99 %, preferably 10 % to 60 % and wherein said mechanically removing step produces dry particulates with a moisture content of less than 20 %, preferably less than 10 %, more preferably less than 5 %.

6. The method of one of claims 1 to 5 wherein said adding step achieves 4,5 to 45,4 kg (0.1 to 100 pounds), preferably 225 g to 6,8 kg (0.5 to 15 pounds) of hydrophobizing reagent per ton of particulates in said water and said moist particulates.

7. The method of one of claims 1 to 6 wherein said adding step includes the step of selecting a hydrophobizing reagent which will adjust a water to particulate contact angle to greater than 80°, preferably greater than 90°.

8. The method of one of claims 1 to 7 wherein said step of mechanically removing water includes the step of directing a gaseous fluid across said surfaces of said particulates.

9. The method of claim 8 wherein said step of directing is performed at a temperature ranging from 20° to 75°, preferably at ambient temperature.

**10.** The method of claim 18 wherein said step of directing includes the step of selecting said gaseous fluid to be selected from the group consisting of air, flue gas, nitrogen, carbon dioxide, and mixture thereof.

PARTICLE 1

AIR 2

WATER 3

PARTICLE 1

## FIG.1

WATER 8   AIR 6   $\gamma_{23}$

$\gamma_{12}$   $\Theta$   $\gamma_{13}$

PARTICLE 4

## FIG.2

$\gamma_{23}$

AIR 6

WATER 8

$\gamma_{12}$   $\Theta$   $\gamma_{13}$

PARTICLE 4

## FIG.3

FIG.4

FIG.5

AIR 34  35  CONDENSER 24

AIR VENT

ROTARY 33 COMPRESSOR

23

HYDROPHOBIC LIQUID

22

PHASE 40 SEPARATOR

27

NON-POLAR GAS 29

PARTICLE/GAS 28 SEPARATOR

PARTICLES 20 AND WATER

21 PUMP

MIXER 25

WATER

AUGER 31 MOTOR

30

32

AIR 34

DRY PARTICLES

EP 1 270 076 A1

FIG.6

EP 1 270 076 A1

THERMAL DRYING

DEWATERING BY DISPLACEMENT

COAL

COAL

FIG.7A

FIG. 7B

EP 1 270 076 A1

**European Patent Office**

## EUROPEAN SEARCH REPORT

Application Number

EP 02 02 2028

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 4 207 186 A (DUGAN CHARLES ET AL) 10 June 1980 (1980-06-10) * the whole document * | 1-7,9 | B03B1/04 C02F1/56 C02F1/54 |
| A | US 4 484 928 A (KELLER JR DOUGLAS V) 27 November 1984 (1984-11-27) * claims * | 1-10 | |
| A | US 4 039 466 A (MATSUDA KANEO ET AL) 2 August 1977 (1977-08-02) * claims; examples * | 1-10 | |
| A | US 5 178 774 A (FAIRCHILD JR HUBERT ET AL) 12 January 1993 (1993-01-12) * claims * | 1-10 | |
| A | US 5 161 694 A (ROE-HOAN YOON ET AL) 10 November 1992 (1992-11-10) * the whole document * | 1-5 | |
| A | US 4 770 766 A (KELLER JR DOUGLAS V ET AL) 13 September 1988 (1988-09-13) * claims * | 1-10 | TECHNICAL FIELDS SEARCHED (Int.Cl.7) B03B C02F |

The present search report has been drawn up for all claims

| Place of search | Date of completion of the search | Examiner |
|---|---|---|
| THE HAGUE | 8 November 2002 | Serra, R |

**EP 1 270 076 A1**

**ANNEX TO THE EUROPEAN SEARCH REPORT
ON EUROPEAN PATENT APPLICATION NO.**        EP 02 02 2028

08-11-2002

| Patent document cited in search report | | Publication date | Patent family member(s) | | Publication date |
|---|---|---|---|---|---|
| US 4207186 | A | 10-06-1980 | NONE | | |
| US 4484928 | A | 27-11-1984 | AU | 8684182 A | 16-12-1983 |
| | | | CA | 1178568 A1 | 27-11-1984 |
| | | | DE | 3249493 T | 20-09-1984 |
| | | | GB | 2131323 A ,B | 20-06-1984 |
| | | | JP | 59501320 T | 26-07-1984 |
| | | | SE | 451803 B | 02-11-1987 |
| | | | SE | 8400393 A | 26-01-1984 |
| | | | WO | 8304189 A1 | 08-12-1983 |
| US 4039466 | A | 02-08-1977 | JP | 913706 C | 21-07-1978 |
| | | | JP | 50124884 A | 01-10-1975 |
| | | | JP | 52043477 B | 31-10-1977 |
| | | | AU | 474653 B | 29-07-1976 |
| | | | AU | 7908775 A | 29-07-1976 |
| | | | CA | 1045368 A1 | 02-01-1979 |
| | | | SE | 401458 B | 16-05-1978 |
| | | | SE | 7503161 A | 22-09-1975 |
| US 5178774 | A | 12-01-1993 | AT | 118462 T | 15-03-1995 |
| | | | AU | 654135 B2 | 27-10-1994 |
| | | | AU | 7995591 A | 23-01-1992 |
| | | | CA | 2076011 A1 | 30-12-1991 |
| | | | DE | 69107456 D1 | 23-03-1995 |
| | | | DE | 69107456 T2 | 22-06-1995 |
| | | | DK | 536194 T3 | 26-06-1995 |
| | | | EP | 0536194 A1 | 14-04-1993 |
| | | | ES | 2068593 T3 | 16-04-1995 |
| | | | FI | 925860 A | 23-12-1992 |
| | | | WO | 9200247 A1 | 09-01-1992 |
| | | | JP | 6502112 T | 10-03-1994 |
| | | | NO | 924778 A | 10-12-1992 |
| | | | US | 5698109 A | 16-12-1997 |
| | | | ZA | 9105025 A | 26-08-1992 |
| US 5161694 | A | 10-11-1992 | NONE | | |
| US 4770766 | A | 13-09-1988 | AU | 604667 B2 | 03-01-1991 |
| | | | AU | 6733387 A | 09-10-1987 |
| | | | CA | 1296899 A1 | 10-03-1992 |
| | | | EP | 0259348 A1 | 16-03-1988 |
| | | | JP | 63502970 T | 02-11-1988 |
| | | | WO | 8705535 A1 | 24-09-1987 |

EPO FORM P0459